(19)

Europäisches
Patentamt
European
Patent Office
Office européen
des brevets

(11) **EP 2 348 457 A1**

(12) **EUROPEAN PATENT APPLICATION**

(43) Date of publication:
**27.07.2011 Bulletin 2011/30**

(51) Int Cl.:
***G06K 9/62*** (2006.01)

(21) Application number: **10250095.6**

(22) Date of filing: **21.01.2010**

<table>
<tr><td>

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **British Telecommunications public
limited company
London EC1A 7AJ (GB)**

</td><td>

(72) Inventor: **Tateson, Jane, Elizabeth
London EC1A 7AJ (GB)**

(74) Representative: **Lidbetter, Timothy Guy Edwin
BT Group Legal
Intellectual Property Department
PP C5A, BT Centre
81 Newgate Street
London
EC1A 7AJ (GB)**

</td></tr>
</table>

(54) **Activity monitoring system**

(57)   A system for monitoring and classifying activities uses data derived from a sensor, which is perturbed by the performance of an activity, to generate a distribution of states within a self organising map (SOM). This distribution of states can be compared with a reference distribution of states, allowing the activity to be compared to the activity that was used in the generation of the reference distribution of states.

EP 2 348 457 A1

Figure 2

**Description**

The present invention relates to an activity monitoring system, and in particular to a method of detecting and classifying activities.

The operators of large enterprises, and in particular the operators of large networks (such as, for example, telecommunications networks, electricity distribution networks, rail networks, etc.) are aware that their infrastructure and plant is exposed to vandalism and theft by third parties. As the price of copper has increased, it has been common for cabling to be stolen from telecommunications networks and railway lines for the scrap value of the copper contained within the cabling.

It is increasingly common for maintenance and interval works on such networks to be automatically scheduled. If network infrastructure could be 'tagged' with sensor devices that can provide an indication that the network has been accessed, activated or otherwise interfered with, and that those activities cannot be correlated with scheduled work then it can be assumed that the activities are unauthorised and appropriate action may be taken.

According to a first embodiment of the present invention there is provided a method of activity monitoring comprising the steps of: a) receiving data generated from the execution of an activity; b) deriving one or more statistics from the received data; c) inserting a data point into a self organising map (SOM), the data point being determined in accordance with the statistics derived in step b); d) assigning the data point to its nearest SOM state; the method being characterised by the further steps of: e) performing a plurality of iterations of steps a) to d) in order to generate a first distribution of SOM states; f) determining the similarity between the first distribution of OM states and a reference distribution of SOM states; and g) classifying the activity on the basis of the similarity determined in step f).

The reference distribution of SOM states may be generated by performing a plurality of iterations of steps a) to d) whilst a reference activity is being executed. During the generation of the reference distribution, the SOM states may be moved towards the data point inserted into the SOM in each iteration of step c); the movement of each SOM state is inversely proportional to the distance between the data point inserted into the SOM and the respective SOM state. After a data point is assigned to its nearest SOM state, that SOM state may be semi-fixed such that subsequent movement of that SOM state is reduced. Alternatively, or in addition, after a data point is assigned to its nearest SOM state, that SOM state is fixed such that that SOM state cannot be moved subsequently. Furthermore, after the plurality of iterations of steps a) to d) during the execution of reference activity have been performed, all of the states in the SOM may be fixed such that that they cannot be moved subsequently. In step a) data may be sampled for the duration of the execution of the activity. In an alternative, in step a) data may be sampled for a partial duration of the execution of the activity.

According to a second embodiment of the present invention there is provided a data carrier device comprising computer executable code for performing a method as described above.

According to a third embodiment of the present invention there is provided a sensor device comprising a sensor means, data processing means, data storage means, the sensor device being arranged to, in use, perform a method as described above. The sensor means may comprise an accelerometer and/or may further comprise a wireless network interface. The sensor means may be located remotely from the sensor device: such a remote sensor means may comprise an optical accelerometer and the sensor means may be in communication with the sensor device via an optical fibre.

Embodiments of the present invention will now be described, by way of example only, with reference to the accompanying drawings in which:

Figure 1 shows a schematic depiction of an arrangement incorporating a method according to the present invention;
Figure 2 shows a schematic depiction of a sensor device for use with a method according to the present invention;
Figure 3 shows a depiction of a flow chart which describes the operation of a method according to the present invention;
Figure 4 shows a schematic depiction of an experimental test bed;
Figure 5 shows a graphical depiction of a random set of points which have been inserted into a three dimensional SOM; and
Figures 6 to 9 show a graphical representation of the SOM of Figure 5 as further data points are inserted into the SOM.

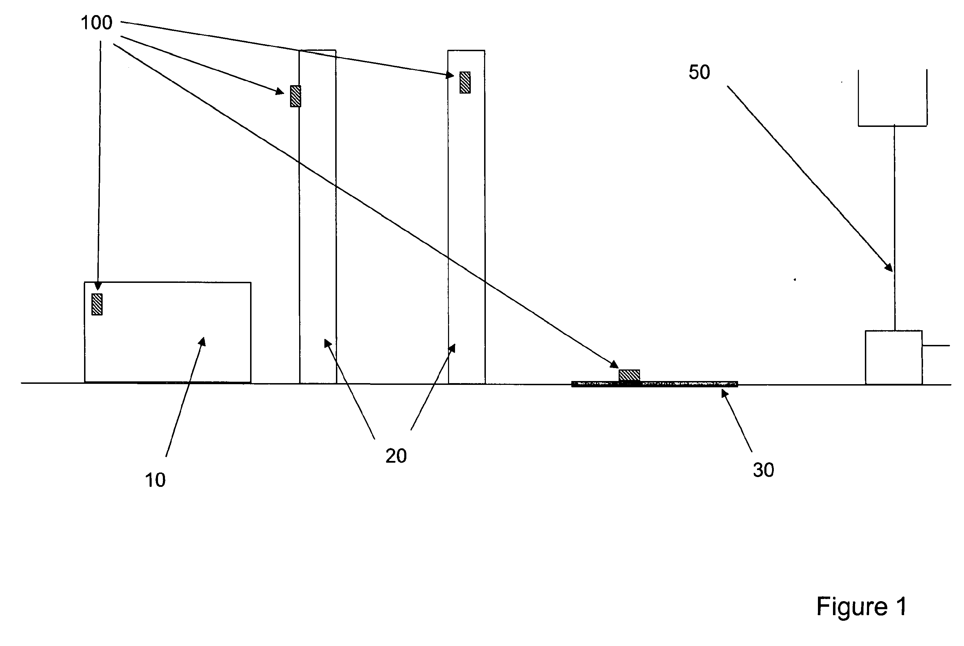

Figure 1 shows a schematic depiction of an arrangement incorporating a method according to the present invention. A sensor device 100 is attached to the exterior of various items of plant or infrastructure 10, 20, 30 (for example a roadside cabinet 10, a telephone pole 20 or a manhole cover 30). The sensor devices are able to establish wireless communications (see below) with wireless gateway 50, which is connected to a communications network (not shown).

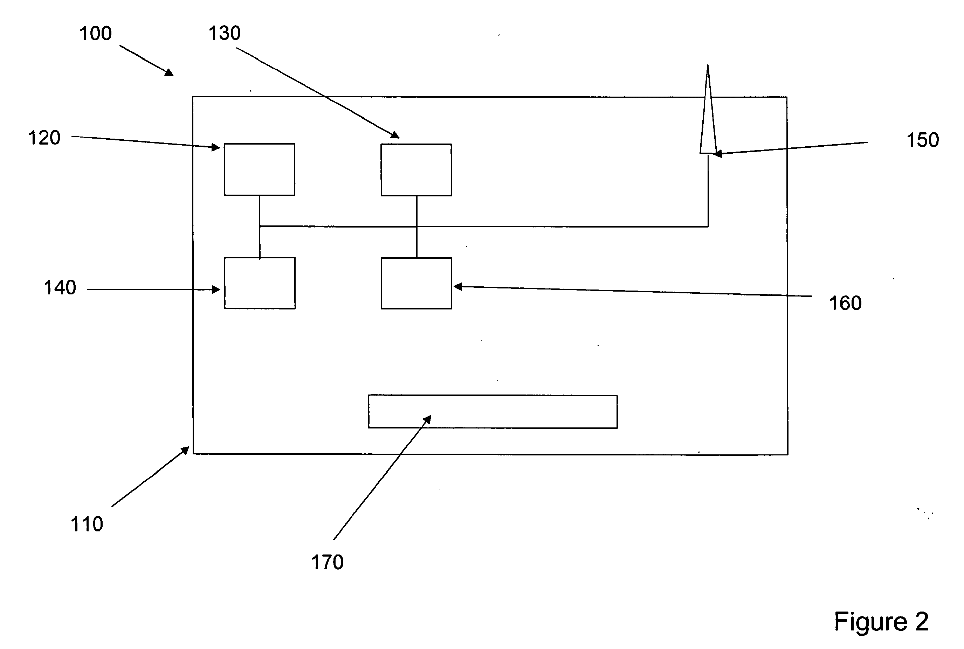

Figure 2 shows a schematic depiction of the one of the sensor devices 100. The sensor device comprises a weather resistant housing 110 within which are comprised CPU 120, non volatile data storage means 130, volatile data storage means 140, wireless interface 150, sensor means 160 and battery 170. The sensor means 160 may be an accelerometer, and is preferably a three dimensional accelerometer.

Referring to Figure 1, the sensor devices are mounted to the exterior of an item of network infrastructure such that when there is an interaction with the item, for example the door of a cabinet being opened, a manhole cover being lifted, a ladder being placed against a telegraph pole and then being climbed, etc., the sensor means within the sensor device will be activated. The sensor means 160 will then generate an electrical signal which is representative of the movement of the sensor device 100. This electrical signal can then be analysed following a method according to the present invention.

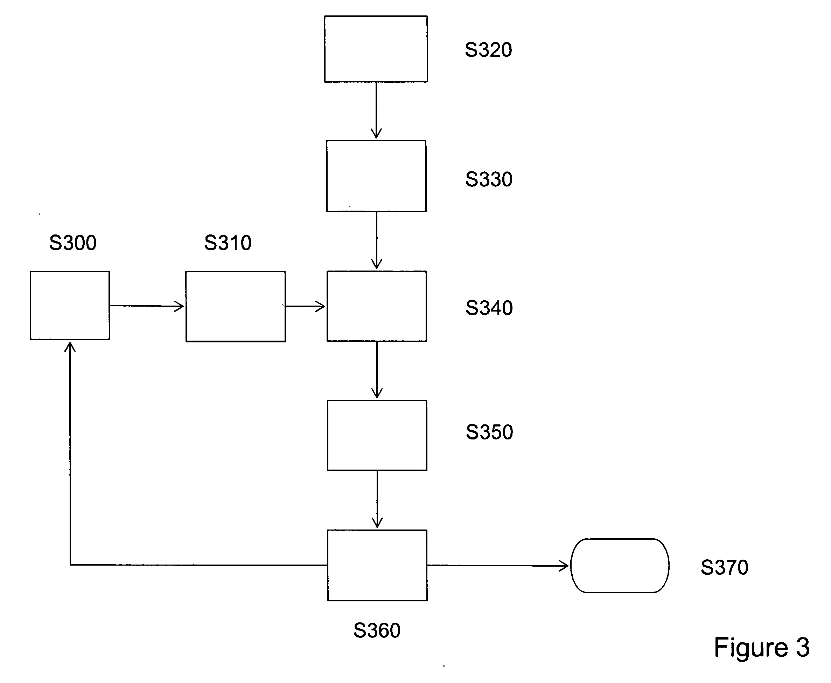

Figure 3 shows a depiction of a flow chart which describes the operation of a method according to the present invention. At step S300, the electrical signal is sampled, for example at a rate of 100Hz, such that in the case that the sensor means is a three dimensional accelerometer, giving 100 sensor readings per second for each of the X, Y and Z axes of the accelerometer.

At step S310, three statistics were derived from the sample data: maximum amplitude, standard deviation, and signal path length. The signal path length is the sum of the absolute distance between successive sensor values, giving an indication of oscillatory motion in the sensor values, as is shown below in equation [1]:

$$signal\ length = \sum_{m=1}^{n-1} \left( x_{m+1} - x_m \right) \qquad [1]$$

for a data set that comprises n values. Through experience and experimentation, it has been found that the important features of the sensor data could be described using these three statistics derived from the sample data. The selected statistics may not be optimal, as analysis indicates that there can be some correlation between the statistics. However, there is a sufficient degree of orthogonality such that it is better to use all of the three different statistics rather than a subset of the three. Furthermore, these three statistics are relatively simple to calculate which enables the present invention to be implemented using sensor devices which have limited processing power. It has also been found that it is possible to capture a useful data set which describes the sensor distribution adequately by taking measurements from the sensor means over a 500 ms period, that is for a data set comprising 50 sensor values. It will be understood that measurements could be taken over a longer, or shorter, period of time but it has been found that 500 ms is an acceptable compromise as it allows the movement detected by the sensor means to be adequately described without requiring excessive amounts of data processing.

Analysis of the data that has been measured has shown that it was not necessary to use all three axes of the accelerometer in order to carry out activity classification. Thus, it is possible to calculate only the three statistics of interest for one axis of the accelerometer. Alternatively, it will be understood that it is also possible to implement the present invention with using data obtained from two or three accelerometer axes. The axis may be selected at random or one of the axes may be pre-selected across a range of sensor devices, for example always using the Y-axis. In one embodiment of the present invention, a self-organising map (see below) is generated for each of the three axes of acceleration. These maps can then be analysed to determine which of the self-organising maps gives the most sensitive response and then only this data set can be used as the basis for subsequent analysis.

Sensitivity of response can be gauged by comparing the diversity of states generated for each axis. The greater the diversity of states, the more information is embodied in the data set, all other things being equal. By simply counting the number of different states that a signature maps to, for each axis of acceleration, the axis generating the greatest number of states is chosen. Note that generating a single signature would not be sufficient to make this decision. A statistical analysis could be carried out to calculate the confidence that a given axis is the most responsive, with reference to generating tens or hundreds of signatures.

The selected data set is then inserted into a Kohonen self-organising map (SOM) (for more details see T Kohonen, "Self-Organizing Maps", 3rd Edition, pub. Springer 2001). An n-dimensional space is constructed at step S320, with each dimension being given preliminary bounds. These should be roughly consistent with the expected range of the values of the three statistics that will be provided to the n-dimensional space. However, even if the estimated bound values are grossly wide of the mark, this will only mean that the map takes longer to converge, and therefore it is not critical to the successful operation of the present invention.

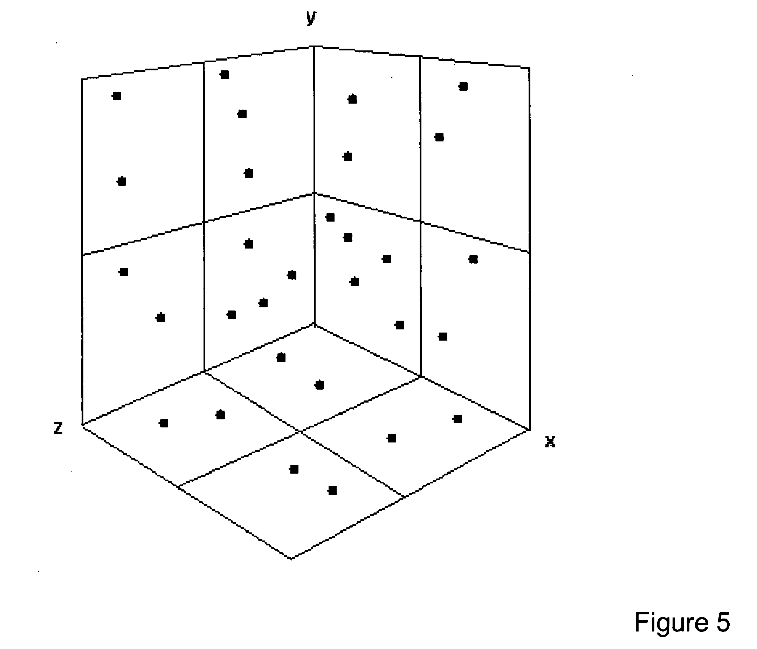

Initially, a random set of points is placed in an n-dimensional space (S330), which corresponds to the initial positions of the set of states within the SOM. As three statistics are being analysed, the space will have three dimensions. The choice of the number of states is a balance between having too few states to distinguish different types of activity and having so many states that each activity appears to be unique and cannot be grouped together with other similar activities. For example, it has been found that in the present invention selecting 256 possible states provides acceptable levels of performance and also does not require excessive amounts of memory when processing the data. Figure 5 shows a schematic depiction of a random set of 30 data points which have been inserted into a three dimensional SOM.

Periodically, for example every half a second (although it will be understood that different periods may be selected), data is sampled from the three statistics of interest and are used at step S340 to determine a point in the 3-dimensional space of the SOM. The Kohonen method involves calculating the Cartesian distance between the point derived from sensor data (the 3 statistics), and the points in space that correspond to the set of states. The point in the SOM derived from the sensor data is then (S350) identified with the state that is nearest to it, that is the nearest state to the sensor data point. The system can then be said to be in that particular state.

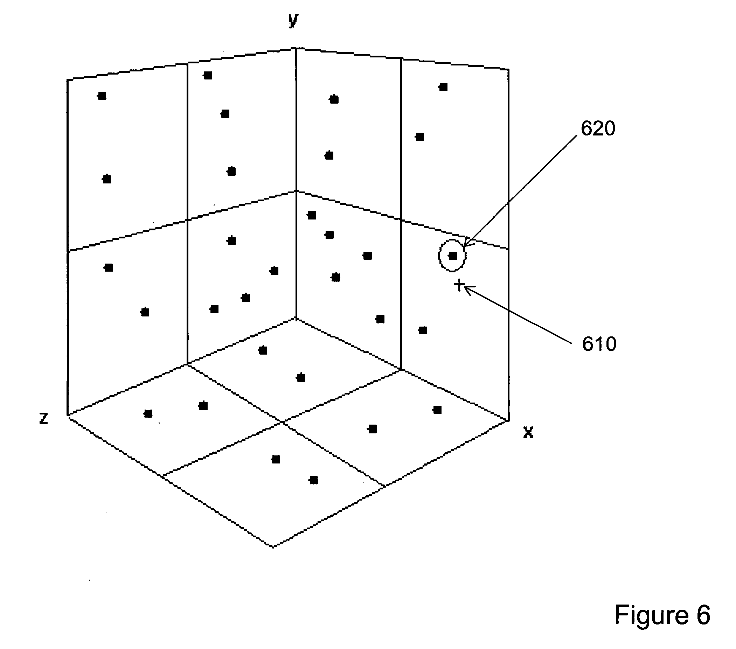

Figure 6 shows the SOM of Figure 5, into which a sensor data point 610 (denoted by a cross) has been inserted. The nearest state 620 to the data point 610 has been identified by being ringed. The data point is then associated with that nearest state 620. The next step of the algorithm is to move the points in space that correspond to the set of states, towards the sensor data point. The distance that each state moves is determined as being a fraction of the distance each state and the data point, with the state nearest to the data point being moved the most. For example, the nearest state is moved 20% of its distance towards the data point; all states not already classed as 'semi-fixed' are moved 1% of their separations towards the data point, whereas all states classed as 'fixed' (see below) are moved only 0.5% of their separation towards the data point.

The sensor device will then take a new sample from the accelerometer; generate a new set of statistics, determine a point in the 3-dimensional space of the SOM, identify the state that is nearest to the new data point and move the states of the SOM relative to the new data point. These steps are repeated until a sufficient number of data samples have been measured and processed.

Referring to Figure 3, at step S360, the states within the SOM are moved towards the data point. The process will then return to step S300 if data is still being sampled from the sensor means, otherwise the process will terminate at S370.

During the calibration phase, all states can move, as new sensor data is presented, but when a state is assigned to some sensor data (i.e. it is the closest state to that data) that state will be flagged as having been assigned to some data. Subsequently, during the calibration phase, that state will not be allowed to move as far as unassigned states. The purpose of this is to bring unassigned states into the right overall sensor data space, so that the majority of them are used, without resetting the space every time new data is seen.

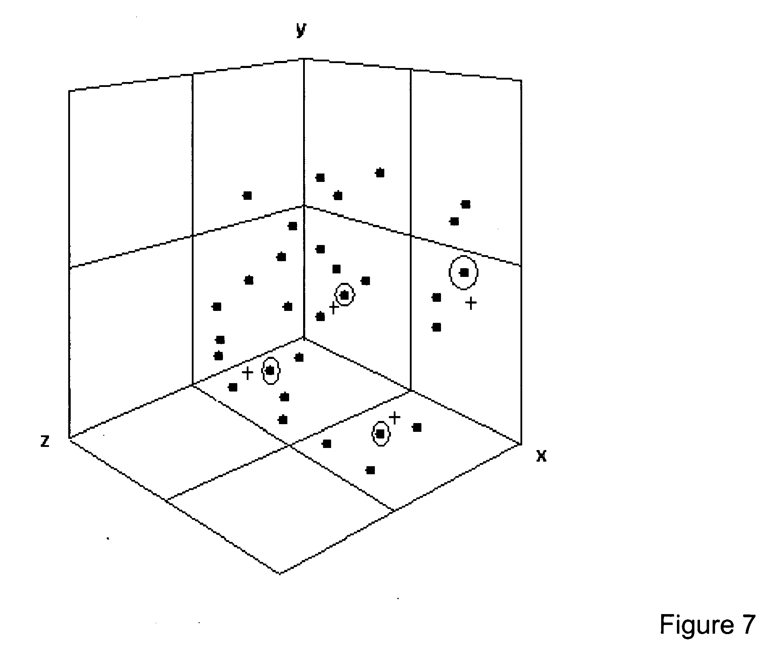

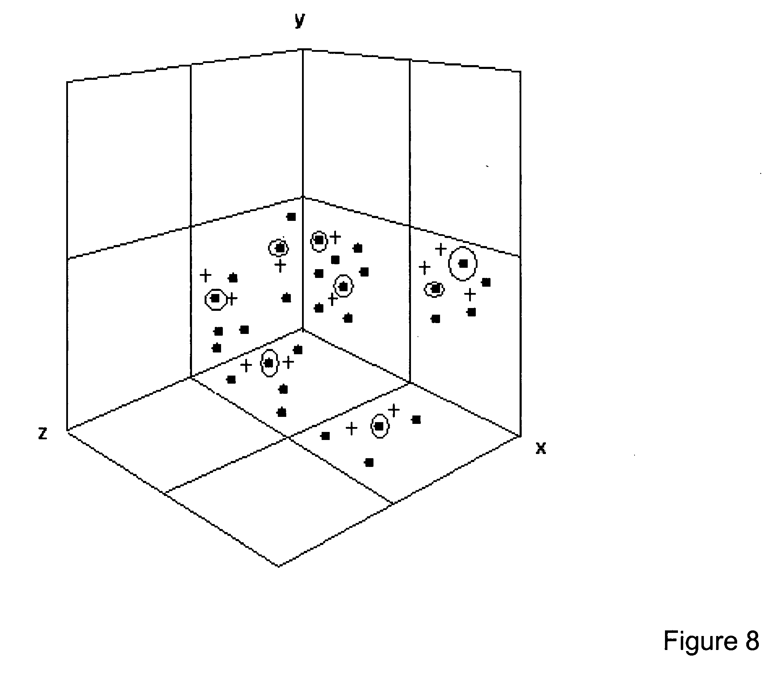

Figure 7 shows a schematic depiction of the SOM shown in Figure 6 as further data points are fed into the self-organising map, the data points being represented by a cross; the corresponding nearest states are shown as being ringed. Figure 8 shows a further depiction of that SOM as yet more data points are added into the self-organising map. It can be seen that as more data points are added into the SOM, the locations of the states within the SOM change. The data points tend to occur within particular regions of the SOM and thus the states tend to move towards these regions as they move towards the data points.

As more data points are fed into the SOM, it will be noticed that the locations of the states have changed. The states move towards the data points, as each one is added. Therefore, after a number of data points have been fed into the SOM (exaggerated here for the sake of illustration), the states can be seen to have moved closer to the volume associated with the data points. This can be clearly seen by comparing Figures 5 & 8.

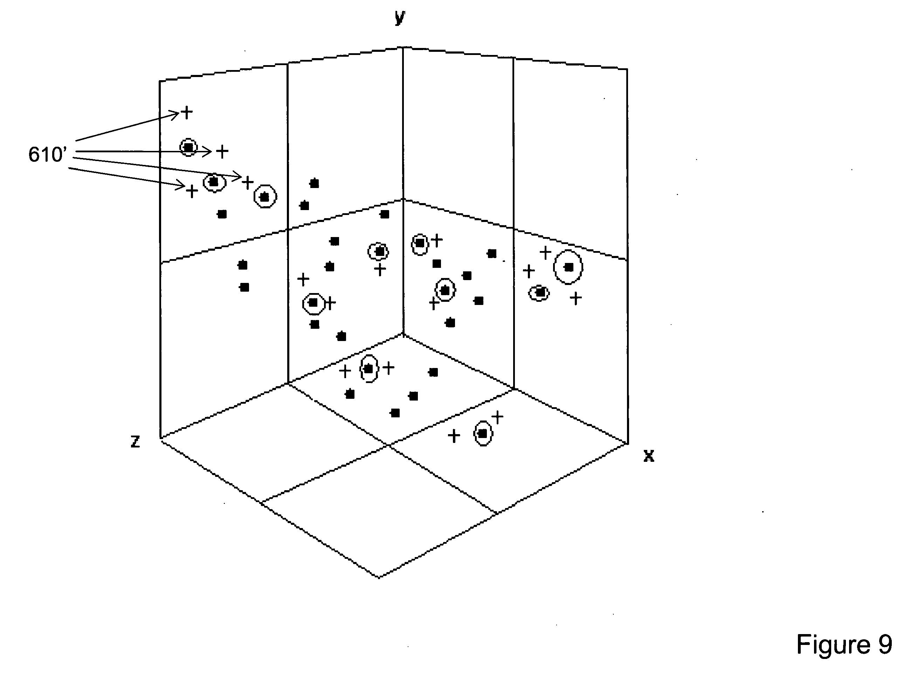

Figure 9 shows a yet further depiction of the SOM previously shown in Figures 5 to 8, with a second calibration event causing further data points to be added to the SOM. It can be seen that these further data points cause the states to be 'pulled' across the SOM towards the new data points 610'. However, the semi-fixed states (i.e. those that were previously associated with a data point and are shown as ringed) move less than the other states, thereby helping to maintain their representation of the previous calibration event. At the end of the calibration phase all states become fixed and are thus unable to move, no matter what data is presented to the SOM. So, in other words, from that stage onward, each new data point becomes associated with its nearest state in the SOM, as before, but without those states being able to move within the SOM.

This calibration phase normally takes place on initial deployment of a sensor device, and will consist of typical activities taking place around the asset to be monitored, such as, for example, climbing a pole or opening and closing a manhole or a cabinet door. This enables the sensor device to capture some activity signatures that it can later recognise during normal maintenance activities. The use of such a calibration phase enables those states that correspond to key activities not to be subjected to being moved greatly after the calibration phase, so as to try to ensure that the data, and hence the activities that they correspond to, do not change greatly over time. Furthermore, it may be desirable to export the positions of these states that were fixed during the calibration phase to other sensor devices deployed in similar environments, so that across this set of sensor devices the meaning, in terms of sensor statistical input of these important states, or indeed the positions of all states, is consistent.

It is unlikely that any two individuals will perform the same task in exactly the same manner, even if the actions that constitute the task are constrained either by the design of a device (for example, unlocking and opening a roadside cabinet) or by a protocol for performing a task (for example, placing a ladder against a telephone pole and climbing up the pole). Therefore, it is highly unlikely that the precise pattern and order of the states within an SOM could be used to characterise a task or an activity. However, rather than using the order in which states within an SOM were generated to classify activities, it has been found that it is possible to classify activities based on the frequency distribution of states, i.e. that the order in which the states were generated did not matter. This provides the further advantage of allowing an activity signature to apply over a range of timescales, which is needed given that some activities take only a few seconds, whereas others may take hours. Here, effectively one method can be used to give signatures over a range of timescales.

Table 1: Exemplary distributions of states

| States | Distribution A | Distribution B | Difference |
|--------|----------------|----------------|------------|
| 1 | 0 | 0 | 0 |
| 2 | 0 | 0 | 0 |
| 3 | 4 | 3 | 1 |
| 4 | 0 | 0 | 0 |
| 5 | 2 | 2 | 0 |
| 6 | 0 | 0 | 0 |
| 7 | 4 | 5 | 1 |
| 8 | 0 | 0 | 0 |
| 9 | 0 | 0 | 0 |
| 10 | 2 | 2 | 0 |

For example, if Table 1 shows the distribution of states for distributions A & B then the summation of the differences in frequencies of states is 2. It will be understood that if distributions A & B were to be identical then the summation of the differences in frequencies of states would be zero. As both distributions comprise 12 data points (corresponding to twelve measurements having been made by the sensor means) then if there is no similarity at all between distributions A and B, i.e. none of the states that were present in distribution A were also present in distribution B, then the summation of the differences in frequencies of states would be 24 (i.e. twice the number of data points in the distribution). For a case where the distributions are of different sizes then it will be necessary to normalise the distributions. For example, if a first distribution contains 12 data states and a second distribution contains 36 data states then each data state in the first distribution will be counted three times so that both distributions comprise the same number of data points.

This statistic can be used to calculate a degree of similarity between the two distributions which, in the general case, can be defined as:

$$\frac{Maximum\ difference - actual\ difference}{Maximum\ difference} \times 100 \qquad [2]$$

Thus, in the present case the difference is

$$\frac{24-2}{24} \times 100 = 91.7\%$$

It will be understood that other techniques may be used to determine the similarity of two distributions, for example a chi squared test may be used.

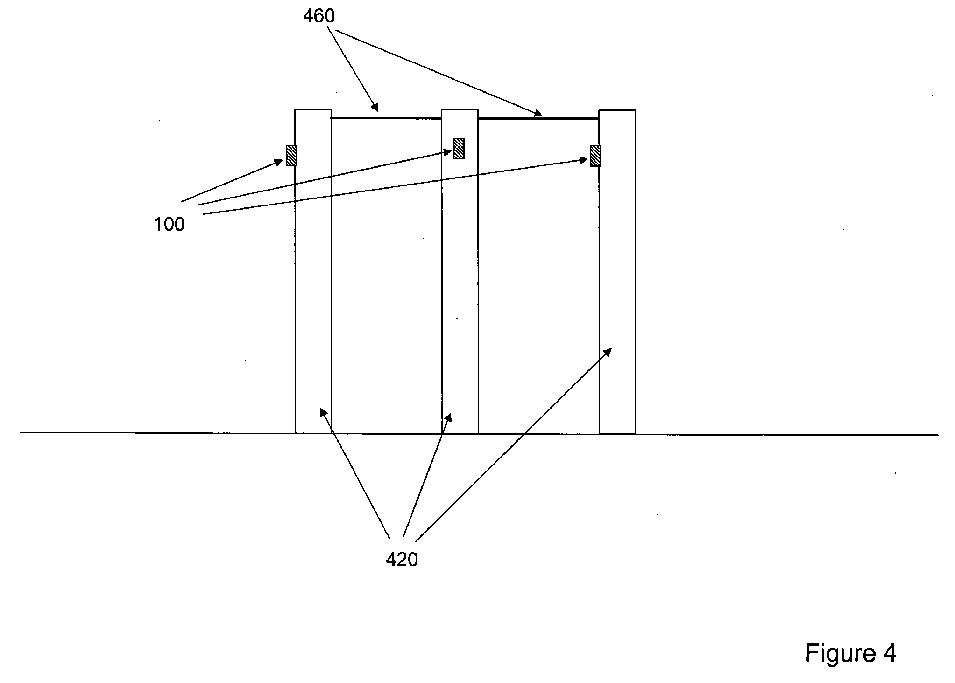

The above described method was then used to experimentally to determine whether it could be used to classify activities as either similar or dissimilar. Figure 4 shows a schematic depiction of the experimental test bed, in which three adjacent telephone poles 420 were connected by an aerial cable 460 and a sensor device 100 was attached to each of the poles. The sensor devices were attached to the poles at similar heights, but without any special care being taken to ensure that the devices were mounted to the pole in an identical fashion. The sensor devices were mounted at roughly the same height (about 1.5m above the ground) and with the same orientation, i.e. flat against the pole, along the longest dimension of the device, and all the same way up. The direction that each sensor device faced should not have made any difference, in this instance on an upright cylindrical pole, but they were all facing the same way. The separation of poles was 6-8 m, which is closer together than is normally found in a telecommunications network. A number of activities were then undertaken, for example putting a ladder against a pole and then climbing that ladder on the pole, on the 3 poles, with accelerometer data being recorder by all three of the sensor devices.

As described above, a set of statistics were calculated, based on measured sensor data, every ½ a second, corresponding to 50 sensor values (with a sampling rate of 100 Hz). In this experiment, the data was used as if each activity was a successive calibration phase of the self-organising map. That is, for the first instance of each activity (each activity instance was characterised by 30 seconds of data) all states could be moved within the SOM. The state nearest to the sensor data point was moved towards the data point by $1/5^{th}$ of the initial separation distance whilst all of the other states were moved towards the data point by $1/100^{th}$ of their initial separation. At the end of the first instance of the activity, all states that had been nearest states, and hence had been associated directly with some data, were 'semi-fixed' and could subsequently only be moved $1/200^{th}$ of their distance towards the data point; in the case where one of these 'semi-fixed' states was the nearest state to the data point then it would be fixed and thus could not move at all. After a set of data relating to a second instance of the activity had been acquired and used to modify the states, all newly assigned nearest states would then too become semi-fixed. After all the data had been used in this way, all states were fixed and the activity data could be presented to the map of states again. The result of this was a string of 59 states for each 30 second activity (only 59 states were generated rather than 60, as the first half second of sensor data was used to find the level about which the vibration oscillates, in order to cancel out the variation in sensor calibration amongst a group of devices).

Table 2 below describes three of the activities that were used with the experimental test bed shown in Figure 4 and Table 3 shows the distribution of states that was generated when those activities were undertaken and processed as described above.

Table 2: Descriptions of Activities 1 to 3.

| Activity | Activity Description |
|---|---|
| 1 | Climbing centre pole, first climb, values from X-axis of accelerometer connected to the centre pole. |
| 2 | Climbing centre pole, second climb, values from X-axis of accelerometer connected to the centre pole. |
| 3 | Climbing centre pole, third climb, values from X-axis of accelerometer connected to the centre pole. |

Table 3: Distributions of states for Activities 1 to 3.

| Activity Number | States | | | | | | | |
|---|---|---|---|---|---|---|---|---|
| | 34 | 45 | 96 | 107 | 170 | 178 | 222 | 232 |
| 1 | 1 | 0 | 20 | 1 | 2 | 2 | 0 | 33 |
| 2 | 0 | 0 | 20 | 0 | 2 | 3 | 1 | 33 |
| 3 | 0 | 1 | 18 | 0 | 3 | 4 | 0 | 33 |

- for each data file (*nsamples* = 59), count frequencies of allocated states (59 in total)
- for each state (in this example 256 states were used) compare the frequency of measured states for Activity 1 with the frequency of measured states for Activity 2.

It is possible to calculate the similarity between activities by calculating the difference between the distribution of states, as is set out in Equation [2] above. For example, when comparing activity 1 to activity 2, there is a difference of 4 states (occurring in states 34, 107, 178 and 222) and thus, given that the maximum difference between the distribution of states is 118 (that is all of the 59 states in the first distribution are different from all of the 59 states in the second distribution), the similarity score is 96.6%. Given the similarities between activities 1 and 2, a high similarity score is to be expected.

Other activities were undertaken on the experimental test bed of Figure 4 and these activities are described below in Table 4.

Table 4: Description of Activities 4 to 9

| Activity Number | Activity Description |
|---|---|
| 4 | Placing ladder against end pole, values from X-axis of accelerometer |
| 5 | Climbing end pole, first climb, collecting data from centre pole, values from X-axis of accelerometer |
| 6 | Climbing end pole, second climb, collecting data from centre pole, values from X-axis of accelerometer |
| 7 | Placing ladder against end pole, collecting data from centre pole, values from X-axis of accelerometer |
| 8 | Collecting data from centre pole, no local activity, values from X-axis of accelerometer |
| 9 | Collecting data from centre pole, individuals walking around pole, values from X-axis of accelerometer |

The same data acquisition and processing techniques were executed whilst activities 4 to 9 were being undertaken and the similarity scores between different activities were calculated. Table 5 below shows these similarity scores for all activities 1 to 9.

| Similarity Score (%) | Activity 1 | Activity 2 | Activity 3 | Activity 4 | Activity 5 | Activity 6 | Activity 7 | Activity 8 | Activity 9 |
|---|---|---|---|---|---|---|---|---|---|
| Activity 1 | N/A | 96.6 | 93.3 | 54.6 | 93.3 | 91.6 | 71.4 | 79.8 | 74.8 |
| Activity 2 | N/A | N/A | 95.0 | 54.6 | 93.3 | 93.3 | 71.4 | 79.8 | 76.5 |
| Activity 3 | N/A | N/A | N/A | 51.3 | 89.9 | 88.2 | 68.1 | 76.5 | 76.5 |
| Activity 4 | N/A | N/A | N/A | N/A | 56.3 | 59.7 | 83.2 | 74.8 | 36.1 |
| Activity 5 | N/A | N/A | N/A | N/A | N/A | 95.0 | 73.1 | 81.5 | 78.2 |
| Activity 6 | N/A | N/A | N/A | N/A | N/A | N/A | 76.5 | 84.9 | 74.8 |
| Activity 7 | N/A | N/A | N/A | N/A | N/A | N/A | N/A | 91.6 | 52.9 |
| Activity 8 | N/A | N/A | N/A | N/A | N/A | N/A | N/A | N/A | 61.3 |

Table 5:  Similarity Scores for Activities 1 to 9.

Using the data from Table 5 it is possible to construct a classifier in which:

- if the similarity score is greater than 90% then the two activities are classified as being the same
- if the similarity score is greater than 80% but less than 90% then the two activities are classified as probably being the same activity
- if the similarity score is less than 60% then the two activities are classified as not being the same.

Applying this classifier to the data in Figure 5 then the following relationships can be inferred (see Table 6 below):

Table 6: Inferred activity relationship derived from similarity score data

| Activity | Is the same as (i.e. similarity score >90%) | Could be the same as (i.e. similarity score is >80%) | Is different from (i.e. similarity score is <60%) |
|---|---|---|---|
| 1 | 2,3,5,6 | - | 4 |
| 2 | 3,5,6 | - | 4 |
| 3 | - | 5,6 | 4 |
| 4 | - | 7 | 5,6,9 |
| 5 | 6 | 8 | - |
| 6 | - | 8 | - |
| 7 | 8 | - | 9 |
| 8 | - | - | - |
| 9 | - | - | - |

When comparing these inferred relationships with the descriptions of the various activities (see Tables 3 & 4 above) then it can be seen that a classification method according to the present invention provides a good level of accuracy. It can be seen that activity 1 is classified as being the same as activities 5 & 6 (and there is a similar association between activity 2 and activities 5 & 6) despite the activities being different (activities 1 and 2 involve the central pole being climbed whilst activities 5 & 6 involve an end pole being climbed). The fact that the climbing of adjacent poles is classified as being the same is probably due to the fact that that the poles are much closer than would generally be the case (the separation is less than 10m). However, this observation suggests that sensor data, even when conveyed through another or several other media (the ground, the cable) still produces a recognisable activity profile, which is encouraging for the common meaning of these distributions, allowing comparison amongst different sites and in situations where there are non-identical mountings. For example, it may not be necessary to install a sensor device on each telegraph pole in a network as it may suffice to install a sensor device on every third pole, for example. Such a limited installation may allow the cost of an automatic monitoring system to be decreased significantly without an appreciable loss in the capability of the monitoring system to detect events which are of interest.

In the event that it is not possible to characterise whether or not there is a relationship between two activities (if the similarity score is between 60% and 80%; for the above example such a case exists for activities 1 and 8 [see Table 6]), it may be possible to simply categorise the relationship between the activities as 'Probably not the same activity'. It may be possible to provide a more refined analysis by using a Bayesian technique such that as further probability distributions are recorded, for a set of activities taking place at a particular asset, the classification can be cumulative, in such a way that accumulates evidence increasing the separation of activities from background noise. It is believed that such an approach is feasible and would not lead to a significant increase in the amount of data processing that would be required.

In the experiment described above with reference to Figure 4, the sensor means comprised a SunSPOT sensor which are supplied by Sun Corporation (see http://www.sunspotworld.com/). These sensors are preferred as they have communications support that allow them to connect to wireless communications networks and a flexible, easy to use development environment. It will be understood that a different sensor may be used in the present invention as long as it has the capabilities to generate and process the data associated with an activity and then transmit that data via a communications network such that it can be analysed and further action taken, as may be required. Other wireless sensor devices that may be used in a similar manner are the MicaZ device produced by Crossbow Inc. or the Intel® Mote sensor device.

It should be understood that the present invention is not limited to the use of a wireless sensor device. For example, an optical accelerometer could be connected to an optical fibre that passes through a cabinet, cable joint, etc. The perturbation of the accelerometer may be detected by a sensor device which can either be co-located with the optical accelerometer or located remotely, for example at a telephone exchange to which the optical fibre is connected. The data generated from the optical accelerometer could then be used in the method according to the present invention, as described above. Similarly, a sensor device 100 as described above with reference to Figure 2 may be modified to replace the wireless interface 150 with an interface that allows data to be transmitted over a metallic conductor, such as for example a copper pair or a coaxial cable.

Those skilled in this technical field will understand that other forms of sensor device may be used in conjunction with a method according to the present invention.

A method according to the present invention, such as that described above with reference to Figure 4 may be modified in a number of different ways. For example, a different method may used to determine the degree of similarity between the distribution of states in the SOMs associated with different activities.

In the method described above, all instances of different frequencies of states were treated the same, i.e. were given the same penalty, when calculating the similarity of the two distributions. An alternative method is to calculate the distance in state space between apparently mismatching states. The nearest state (in state space) that is populated in distribution B with which distribution A is being compared, which has not already had its states matched exactly with those in distribution A, can be used to give some mitigation of dissimilarity, depending on how far away the two states are from each other.

Table 7: Exemplary state distributions

| State | Distribution A | Distribution B | Distribution C |
|---|---|---|---|
| 1 | 3 | 3 | 3 |
| 5 | 2 | 1 | 1 |
| 8 | 1 | 1 | 1 |
| 9 | 0 | 1 | 0 |
| 21 | 0 | 0 | 1 |

Figure 7 gives examples of distributions A, B & C. It can be seen that when comparing Distribution A with Distributions B & C then the *nscore* parameter would have been calculated as being equal to 2 for both Distributions B & C, because there is one state mismatch between the distributions. However, it can be seen that Distribution can be said to be closer to Distribution A than Distribution C, as the distance between states 5 and 9 is smaller than the distance between states 5 and 21.

This logic can be expressed as

```
if ((closestDistance*closestDistance)/cutoffParameter > 2){
            nscore = nscore +2
        }else{
        nscore= nscore + (closestDistance*closestDistance)/cutoffParameter
 }
```

where the 'closestDistance' parameter is the distance between the mismatched states that are of interest.

This allows states that are closer together to be given a greater level of corresponding similarity, than states that are further apart. An appropriate value for the cut-off parameter may be determined empirically. The value of the cut-off parameter will depend upon the range over which the sensor data varies and the number of states that there are within the SOM.

It will be understood that the present invention may be used to measure a variety of different inputs, for example the linear movement of a sensor (along one or more axes), the vibration of a sensor (in terms of vibration frequencies and/or amplitude), sensor rotation, etc. If a sensor can generate a signal that is representative of the motion of an apparatus or device, or an activity being performed on such an apparatus or device, then it is possible for the signal to be processed in a manner according to the present invention.

In some situations it may be that that when there is no activity being performed then there will be a relatively large background noise level and only a smaller signal being present when an action was being undertaken. In order to be able to differentiate the signal from the background noise, it may be advantageous, when setting up the original Kohonen state space to allocate states within this background noise amplitude range, on the basis of amplitude only. It has been found that this tends to bring about the convergence of those amplitude vibrations on to one state, which is then helpful in distinguishing the signal from background sensor noise.

It will be understood that the a method according to the present invention may be implemented using computer executable code. Such computer code may be supplied or provided via download, for example via the internet, or on some physical media, for example, DVD, CD-ROM, USB memory stick, etc.

**Claims**

**1.** A method of activity monitoring comprising the steps of:

a) receiving data generated from the execution of an activity;

b) deriving one or more statistics from the received data;

c) inserting a data point into a self organising map (SOM), the data point being determined in accordance with the statistics derived in step b);

d) assigning the data point to its nearest SOM state; the method being **characterised by** the further steps of:

e) performing a plurality of iterations of steps a) to d) in order to generate a first distribution of SOM states;

f) determining the similarity between the first distribution of SOM states and a reference distribution of SOM states; and

g) classifying the activity on the basis of the similarity determined in step f).

2. A method according to Claim 1 wherein the reference distribution of SOM states is generated by performing a plurality of iterations of steps a) to d) whilst a reference activity is being executed.

3. A method according to Claim 2, wherein during the generation of the reference distribution, the SOM states are moved towards the data point inserted into the SOM in each iteration of step c).

4. A method according to Claim 3, wherein the movement of each SOM state is inversely proportional to the distance between the data point inserted into the SOM and the respective SOM state.

5. A method according to any of Claims 2 to 4, wherein after the data point is assigned to its nearest SOM state, that SOM state is semi-fixed such that subsequent movement of that SOM state is reduced.

6. A method according to any of Claims 2 to 4, wherein after the data point is assigned to its nearest SOM state, that SOM state is fixed such that that SOM state cannot be moved subsequently.

7. A method according to Claim 2, wherein after the plurality of iterations of steps a) to d) during the execution of reference activity have been performed, all of the states in the SOM are fixed such that that they cannot be moved subsequently.

8. A method according to any of Claims 1 to 7, wherein in step a) data is sampled for the duration of the execution of the activity.

9. A method according to any of Claims 1 to 7, wherein in step a) data is sampled for a partial duration of the execution of the activity.

10. A data carrier device comprising computer executable code for performing a method according to any of Claims 1 to 9.

11. A sensor device (100) comprising a sensor means (160), data processing means (120), data storage means (130), the sensor device being arranged to, in use, perform a method according to any of Claims 1 to 9.

12. A sensor device (100) according to Claim 11 wherein the sensor means (160) comprises an accelerometer.

13. A sensor device (100) according to Claim 11 or Claim 12 further comprising a wireless network interface (150).

14. A sensor device (100) according to Claim 11 or Claim 12 wherein the sensor means (160) is located remotely from the sensor device.

15. A sensor device (100) according to Claim 14 when dependent on Claim 12, wherein the sensor means (160) comprises an optical accelerometer and the sensor means is in communication with the sensor device via an optical fibre.

Figure 1

Figure 2

EP 2 348 457 A1

Figure 3

EP 2 348 457 A1

460

100

420

Figure 4

Figure 5

Figure 6

EP 2 348 457 A1

Figure 7

Figure 8

Figure 9

Europäisches
Patentamt
European
Patent Office
Office européen
des brevets

**EUROPEAN SEARCH REPORT**

Application Number

EP 10 25 0095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TEUVO KOHONEN ET AL: "Engineering Applications of the Self-Organizing Map", PROCEEDINGS OF THE IEEE, IEEE. NEW YORK, US, vol. 84, no. 10, 1 October 1996 (1996-10-01), XP011043764, ISSN: 0018-9219 * I.B and page 1363, specifically Figure 4 and page 1365, column 2, last paragraph * | 1-15 | INV. G06K9/62 |
| X | KASSLIN M ET AL: "Process state monitoring using self-organizing maps", ARTIFICIAL NEURAL NETWORKS, 2. PROCEEDINGS OF THE 1992 INTERNATIONAL CONFERENCE (ICANN-92) 4-7 SEPT. 1992 BRIGHTON, UK, 4 September 1992 (1992-09-04), - 7 September 1992 (1992-09-07), pages 1531-1534 VOL., XP008129132, Artificial Neural Networks, 2. Proceedings of the 1992 International Conference (ICANN-92) Elsevier Amsterdam, Netherlands ISBN: 0-444-89488-8 * abstract, 2.1-2.2 and 3 * | 1 | |
| | | | TECHNICAL FIELDS SEARCHED (IPC) |
| | | | G06K |
| X | TEUVO KOHONEN: "Self-Organizing Maps", 1 September 1996 (1996-09-01), SPRINGER SERIES IN INFORMATION SCIENCES, SPRINGER, BERLIN, DE, XP007910976, ISSN: 0720-678X * page 270 - page 273 * | 1 | |

-/--

The present search report has been drawn up for all claims

| Place of search | Date of completion of the search | Examiner |
|---|---|---|
| The Hague | 15 November 2010 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 25 0095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROEMER M J ET AL: "Advanced diagnostics and prognostics for gas turbine engine risk assessment", AEROSPACE CONFERENCE PROCEEDINGS, 2000 IEEE MARCH 18-25, 2000, PISCATAWAY, NJ, USA,IEEE, vol. 6, 18 March 2000 (2000-03-18), pages 345-353, XP010516010, ISBN: 978-0-7803-5846-1 * abstract and pages 349-350 * | 1 | |
| X | TIMUSK M ET AL: "Fault detection using transient machine signals", MECHANICAL SYSTEMS AND SIGNAL PROCESSING, LONDON, GB, vol. 22, no. 7, 1 October 2008 (2008-10-01), pages 1724-1749, XP022795178, ISSN: 0888-3270, DOI: DOI:10.1016/J.YMSSP.2008.01.013 [retrieved on 2008-02-14] * abstract, 1.2, 6 * | 1 | |
| A | YPMA A ET AL: "Novelty detection using self-organizing maps", PROGRESS IN CONNECTIONIST-BASED INFORMATION SYSTEMS. PROCEEDINGS OF THE 1997 INTERNATIONAL CONFERENCE ON NEURAL INFORMATION PROCESSING AND INTELLIGENT INFORMATION SYSTEMS, SPRINGER VERLAG, SG, vol. 2, 24 November 1997 (1997-11-24), pages 1322-1325, XP007915720, ISBN: 978-983-3083-64-0 | 1 | TECHNICAL FIELDS SEARCHED (IPC) |

-/--

The present search report has been drawn up for all claims

| Place of search | Date of completion of the search | Examiner |
|---|---|---|
| The Hague | 15 November 2010 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 25 0095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOGLUND A J ET AL: "A computer host-based user anomaly detction system using the self-organizing map", NEURAL NETWORKS, 2000. IJCNN 2000, PROCEEDINGS OF THE IEEE-INNS-ENNS INTERNATIONAL JOINT CONFERENCE ON 24-27 JULY 2000, PISCATAWAY, NJ, USA,IEEE, vol. 5, 24 July 2000 (2000-07-24), pages 411-416, XP010507043, ISBN: 978-0-7695-0619-7 ----- | 1 | |
| A | VECER P ET AL: "Application of the self-organizing map to manual automotive transmission", SIGNAL PROCESSING AND INFORMATION TECHNOLOGY, 2003. ISSPIT 2003. PROCEEDINGS OF THE 3RD IEEE INTERNATIONAL SYMPOSIUM ON DARMSTADT, GERMANY 14-17 DEC. 2003, PISCATAWAY, NJ, USA,IEEE, 14 December 2003 (2003-12-14), pages 612-615, XP010729229, ISBN: 978-0-7803-8292-3 ----- | 1 | |
| A | MARSLAND S ET AL: "On-line novelty detection for autonomous mobile robots", ROBOTICS AND AUTONOMOUS SYSTEMS, ELSEVIER SCIENCE PUBLISHERS, AMSTERDAM, NL, vol. 51, no. 2-3, 31 May 2005 (2005-05-31), pages 191-206, XP004843642, ISSN: 0921-8890, DOI: DOI:10.1016/J.ROBOT.2004.10.006 ----- -/-- | 1 | TECHNICAL FIELDS SEARCHED (IPC) |

The present search report has been drawn up for all claims

| Place of search | Date of completion of the search | Examiner |
|---|---|---|
| The Hague | 15 November 2010 | Versluis, Anton |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

Europäisches
Patentamt

European
Patent Office

Office européen
des brevets

# EUROPEAN SEARCH REPORT

Application Number

EP 10 25 0095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOHONEN T: "Self-organized maps of sensory events", PHILOSOPHICAL TRANSACTIONS OF THE ROYAL SOCIETY OF LONDON,SERIES A; MATHEMATICAL AND PHYSICAL SCIENCES, ROYAL SOCIETY, LONDON, GB, vol. 361, no. 1807, 15 June 2003 (2003-06-15), pages 1177-1186, XP007915703, ISSN: 0080-4614, DOI: DOI:10.1098/RSTA.2003.1192 [retrieved on 2003-05-06] ----- | 1 | |
| A | KRAUSE A ET AL: "Unsupervised, dynamic identification of physiological and activity context in wearable computing", WEARABLE COMPUTERS, 2003. PROCEEDINGS. SEVENTH IEEE INTERNATIONAL SYMP OSIUM ON 21-23 OCT. 2003, PISCATAWAY, NJ, USA,IEEE, LOS ALAMITOS, CA, USA, 21 October 2003 (2003-10-21), pages 88-97, XP010673806, DOI: DOI:10.1109/ISWC.2003.1241398 ISBN: 978-0-7695-2034-6 ----- | 1 | |

TECHNICAL FIELDS SEARCHED (IPC)

The present search report has been drawn up for all claims

| Place of search | Date of completion of the search | Examiner |
|---|---|---|
| The Hague | 15 November 2010 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T KOHONEN.** Self-Organizing Maps. pub. Springer, 2001